# EUROPEAN PATENT APPLICATION

(11) **EP 1 646 253 A2**
(43) Date of publication of application: **12.04.2006**
(21) Application number: 05023877.3
(22) Date of filing: 02.11.2005
(51) Int. Cl.: H04Q 7/24

(54) **Method for the controlling of repeated SACCH operation**

(71) Applicant: SIEMENS AKTIENGESELLSCHAFT, 80333 München (DE)
(72) Inventor: Hofmann, Jürgen, 86504 Merching (DE); Vutukuri, Eswar, Romsey SO51 7LR (GB)

(57) **Abstract**

The invention relates to a method for the controlling of Repeated SACCH operation in GSM/GERAN communication systems.

A mobile station, supporting Repeated SACCH operation, sends a SACCH Repetition Request in uplink direction to a network, to inform the network about support of Repeated SACCH by the mobile. The Repetition request in uplink direction is sent in case that the mobile station switches from a given AMR mode to a lower AMR mode, for which repeated SACCH operation is applicable. The network sends in downlink direction a SACCH repetition order in response, to inform the mobile station, that the network supports Repeated SACCH too. The Repeated SACCH mode will be activated at the mobile station and at the base station.

## Description

The invention relates to a method for the controlling of Repeated SACCH operation in GSM/GERAN communication systems.

At GERAN meeting #26 a concept of Repeated SACCH Repetition was agreed to increase the robustness of a data transmission over the so called "Slow Associated Control Channel, SACCH". This channel is required in the presence of a robust AMR full rate mode in GSM/GERAN networks.

The concept consists of repeating SACCH blocks on the transmitter side and to combine those two blocks on the receiver side. This needs mainly changes of software in the network and the mobile station both.

Operators will intend to introduce this feature as fast as possible into their networks. Hence a preferred solution should avoid any core network related signalling, involving higher implementation and testing effort and thus delaying the deployment of this feature.

Therefore it is the aim of the invention, to develop such a solution, whereas a explicit core network related signalling should be avoided.

This aim is solved by the features of claim 1. Advantageous details of the invention are described by the features of the succeeding claims.

The inventive method avoids any explicit core network related signalling and is transparent for the core network, too.

In the succeeding the invention will be described in more detail.

There are two different proposals to be discussed for controlling the Repeated SACCH mode.

The first solution is to use the spare bit in layer 1 header of SACCH to signal the usage of repeated SACCH.

The second solution is to use the stealing flags of the SACCH to control the mode of SACCH transmission - either normal SACCH mode or Repeated SACCH mode.

This results in the fact, that for controlling of SACCH transmission mode in uplink direction, the base station decides and commands - based on uplink measurements - the mobile to Repeated SACCH on uplink. This is called "SACCH repetition order".

Therefore signals either use spare bits in "Layer 1 header" or signals use a defined setting of stealing flags - for example "00000000" - on the downlink SACCH to command the mobile to use Repeated SACCH in uplink direction.

Additionally the mobile station indicates either through spare bits in "Layer 1 header" of SACCH or with help of a defined setting of stealing flags in uplink direction SACCH, that the preceding downlink SACCH was not correctly received. This is called "SACCH repetition request". The meaning is that a SACCH decoding failure happened. This information is used by the base station to decide whether a Repeated SACCH on the downlink should be applied.

The proposed concept of Repeated SACCH foresees that an upgraded mobile station or an upgraded network, supporting this feature, needs to be able to jointly decode two adjacent SACCH blocks, if the preceding SACCH block could not be decoded.

In order to avoid explicit signalling of the capabilities the inventive method is proposed, described in the succeeding.

The inventive method is applied during the call when the mobile first switches to a lower full rate AMR mode, for example AMR 4.75, AMR 5.15 or AMR 5.9.

In this case the mobile will send in the next SACCH frame a SACCH repetition request in uplink direction to inform the network that the mobile supports Repeated SACCH.

The base station will send in downlink direction a SACCH repetition order as a response, to inform the mobile, that the base station also supports Repeated SACCH.

The Repeated SACCH mode will be activated at the mobile and at the base station, until the base station decides to switch back to normal SACCH mode on either link.

In the succeeding, an interworking between a legacy network, which only supports normal power control, and a mobile station, which supports Repeated SACCH, will be described.

For a legacy network there is the risk that due to different settings of stealing flags, indicating a SACCH repetition request, an uplink SACCH message could result in a decoding failure. This would be the case, if the different setting of the stealing flags is not accepted. However, it is believed that such a base station equipment can be software upgraded to ignore the stealing flag setting on the uplink.

A new mobile will not get any response from the legacy network and will derive that Repeated SACCH is not supported by the legacy network. The mobile station will omit any further transmission of a SACCH repetition request.

In the succeeding, an interworking between a network, which supports Repeated SACCH, and a legacy mobile station, which does not support Repeated SACCH, will be described.

For this kind of new network no interworking issues will appear with legacy mobiles, because legacy mobile stations would not initiate SACCH repetition requests in uplink direction.

In a further embodiment, the described procedure will be repeated for a predefined number of times to increase the reliability of the information exchange. As soon the network is aware of a mobile station, which supports Repeated SACCH, the network can use the inventive method when appropriate.

There is a further embodiment, relating to a handover procedure. In case of a handover of the mobile station to another base station, the new radio cell will not have any information about the fact, if the mobile station supports the Repeated SACCH or not. Therefore the described detection mechanism is started again as soon as the mobile station switches to a lower full rate AMR mode for which Repeated SACCH operation is defined.

The inventive method can also be applied if different signalling procedures for controlling the transmission of the SACCH mode are applied.
In this case one or more spare bits in the Layer 1 header of the SACCH are used instead of the stealing flags, to transport either the SACCH repetition request or the SACCH repetition order.

## Claims

1. Method for controlling of Repeated SACCH operation in GSM/GERAN communication systems,
- wherein a mobile station, supporting Repeated SACCH operation, sends a SACCH Repetition Request in uplink direction to a network, to inform the network about support of Repeated SACCH by the mobile.
- wherein the Repetition request in uplink direction is sent in case that the mobile station switches from a given AMR mode to a lower AMR mode, for which repeated SACCH operation is applicable,
- wherein the network sends in downlink direction a SACCH repetition order in response, to inform the mobile station, that the network supports Repeated SACCH too,
- wherein the Repeated SACCH mode will be activated at the mobile station and at the base station.

2. Method according to claim 1, wherein the Repeated SACCH mode will be activated at the mobile station and at the base station, until the base station decides to switch back to normal SACCH mode on either link.

3. Method according to claim 1, wherein the sending of the SACCH repetition request in uplink direction and the sending of the SACCH repetition order in downlink direction is repeated for a predefined number of times.

4. Method according to claim 1, wherein, after a handover of the mobile station to another base station, the sending of the SACCH repetition request in uplink direction is done if the mobile station switches to a lower AMR mode, for which Repeated SACCH operation is defined.

5. Method according to claim 1, wherein for signalling of SACCH repetition request or SACCH repetition order, spare bit in layer 1 header of SACCH will be used.

6. Method according to claim 1, wherein for signalling of SACCH repetition request or SACCH repetition order, stealing flags of the SACCH will be used.
